# EUROPÄISCHE PATENTSCHRIFT

(11) **EP 2 390 204 B1**
(45) Veröffentlichungstag und Bekanntmachung des Hinweises auf die Patenterteilung: **17.12.2014**
(21) Anmeldenummer: 11158966.9
(22) Anmeldetag: 21.03.2011
(51) Int. Cl.: B65G 1/137, G06Q 10/08

(54) **System zur Ergänzung eines Kleingüterlagers**
System for completing a warehouse for small articles
Système complétant un stockage de petits articles

(30) Priorität: 25.03.2010 FI 20105302
(43) Veröffentlichungstag der Anmeldung: 30.11.2011
(60) Teilanmeldung: 14170786.9
(73) Patentinhaber: Ferrometal OY, 01900 Nurmijärvi (FI); Würth Industrie Service GmbH & Co. KG, 97980 Bad Mergentheim (DE)
(72) Erfinder: Rantanen, Mika, 01900, Nurmijärvi (FI); Brandt, Mika, 01900, Nurmijärvi (FI)
(74) Vertreter: Vollmer, Dirk

(56) Entgegenhaltungen:
- EP-A1- 2 098 464
- EP-A1- 2 186 754
- EP-A2- 1 452 462
- WO-A1-2010/017873
- DE-A1-102008 032 507

## Beschreibung

### GEBIET DER ERFINDUNG

Gegenstand der Erfindung ist ein im Einleitungsteil zum Patentanspruch 1 definiertes Verfahren zur Ergänzung eines Kleingüterlagers.

### HINTERGRUND DER ERFINDUNG

Im Zusammenhang mit dieser Erfindung und Anmeldung werden mit dem Begriff Kleingüterlager im weiteren Sinn verschiedene Lagerplätze bezeichnet, wie Regale, Schubfächer, Schränke, Rollcontainer, Arbeitsflächen und hieraus hergestellte größere oder kleinere Gesamtheiten, in denen verschiedene Kleingüter aufbewahrt werden können. Weiterhin werden mit dem Begriff Kleingüter, welche nicht unbedingt von geringer Größe sein müssen, verschiedene Stückgüter für den Einsatz in Industrie, Bauwesen, Wartung und entsprechenden Funktionen des Geschäftslebens bezeichnet, wie zum Beispiel Bolzen, Muttern, Ersatzteile, Arbeitsgeräte usw.

Traditionell wurde die Überwachung von Lagerbeständen und deren Ergänzung von einem Lagerverwalter erledigt, der die Lagerräume zu festgelegten Zeiten kontrolliert und für erforderliche Bestellungen und Ergänzungen sorgt. Um dies zu beschleunigen und um Fehler zu beseitigen, wurde zum Auffüllen der Regale das Strichcodesystem entwickelt, das ein schnelles und effektives Verfahren zum Sammeln von Verbrauchsdaten über den Einsatz und den Verbrauch von Kleingütern ermöglicht. Jedoch ist auch bei diesem Verfahren manuelle Arbeit erforderlich, also eine Person, die die Regale oder entsprechende Lagerplätze für Kleingüter überprüft. Eine solche visuelle Überprüfung und Einschätzung des Ergänzungsbedarfs beruht weitgehend auf der Erfahrung oder sogar Mutmaßungen einer Person. Somit kann eine beträchtliche Überfüllung zustandekommen, wenn ein Kasten nicht ganz voll aussieht, die Waren in Wirklichkeit aber für mehrere Jahre ausreichen können.

Man hat versucht, diese Probleme mit automatischen Systemen zu verbessern, die auf Gewichtsänderungen des Lagerplatzes reagieren. Dabei erfolgt an jedem Lagerplatz eine Gewichtskontrolle, mit der der Verbrauch von gelagerten Gütern automatisch überprüft werden kann. Aufbau und Unterhalt eines solchen Systems sind jedoch teuer, und es ist für unterschiedliche und variable Kleingüter und deren Mengen nicht ausreichend flexibel. Besonders bei der Lagerhaltung von kleinen und leichten Gütern funktionieren Wiegesysteme nicht zuverlässig und ausreichend präzise.

Die EP 2 186 754 A1 offenbart eine Kommissionieranlage mit einem Regal und mit einer Fördertechnik, um Auftragsbehälter zu transportieren. An einem Kommissionierplatz steht ein Kommissionierer, um Artikel manuell gemäß einem Kommissionierauftrag aus Lagerbehältern in einen Auftragsbehälter zu kommissionieren. Der Kommissionierplatz umfasst einen am Regal geführten Kommissionierwagen und eine Vielzahl von Regalplätzen, in denen Lagerbehälter zur Entnahme von Artikeln angeordnet sind. Der Kommissionierwagen weist eine Anzeigevorrichtung auf, die dem Kommissionierer zeigt, wie viele Artikel aus dem Lagerbehälter zu entnehmen sind. Jedem Regalplatz wiederum ist ein Signalgeber zugeordnet, der dem Kommissionierer anzeigt, aus welchem der Regalplätze gerade ein oder mehrere Artikel zur Abarbeitung des Kommissionierauftrags zu entnehmen ist bzw. sind.

Die WO 2010/017873 A1 offenbart ein Verfahren und eine Vorrichtung zum manuellen Kommissionieren von Stückgut in einer Kommissionieranlage. Das Stückgut wird vorzugsweise sortenrein in Behältern auf einer Förderstrecke zu einem Durchlaufregal geführt. Nach Lesung und Erkennung werden diese über einen Lift oder Etagenbediengeräte in ausgewählte Durchlaufkanäle verbracht, wo diese an Ausgängen von Kommissionierern erreichbar sind.

Die EP 2 098 464 A1 beschreibt eine Kommissioniereinrichtung mit einem Kommissionierbereich zum Kommissionieren von Artikeln aus Quellbehältern in zielbehälter durch eine sich im Kommissionierbereich befindende Kommissionierperson. Benachbart zum Kommissionierbereich ist wenigstens eine Zielbehälterumlauffördervorrichtung angeordnet, welche jeweils eingerichtet ist, dass von ihr mehrere Zielbehälter entlang eines Zielbehälterförderkreises in einer Förderkreisebene umlaufend wiederholt der Kommissionierperson zuführt, bis der jeweilige Zielbehälter zu einem vorbestimmten Grad mit Artikeln kommissioniert ist. Die Behälter können einen RFID-Chip zur Identifikation der darin aufgenommenen Artikel aufweisen. Leere Quellbehälter können automatisch aus dem Kommissionierbereich abgeführt werden oder direkt als Zielbehälter weiter verwendet werden.

### ZWECK DER ERFINDUNG

Zweck der Erfindung ist, die obengenannten Mängel der bekannten Technik zu beseitigen. Insbesondere ist Zweck der Erfindung, ein neuartiges Verfahren vorzustellen, mit dem die Verwaltung von Kleingüterlagern, d. h. die Verbrauchsüberwachung und Lagerergänzung, möglichst automatisch und individuell erfolgen können. Weiterhin ist Zweck der Erfindung, ungeachtet der teilweise automatischen Funktionen den Einsatz von einfachen, kostengünstigen und frei variablen Lagerstrukturen zu ermöglichen.

### ZUSAMMENFASSUNG DER ERFINDUNG

Ein System, das nicht Teil der beanspruchten Erfindung ist, wird folgend detailliert beschrieben. Zu einem System zur Ergänzung eines Kleingüterlagers gehören eine Anzahl Lagerplätze wie Regale und dergleichen, und in diesen eine große Anzahl Lagerungseinheiten wie Kästen, Paletten oder dergleichen, die mit Identifizierungstranspondern zwecks Erkennung der in ihnen zu lagernden Kleingüter ausgestattet sind. Entsprechend dieser Erfindung fungiert als Identifikationstransponder ein RFID-Transponder, weiter gehört zum System eine mit einem Lesegerät ausgestattete aktive Rückführungsstation zwecks automatischer Registrierung der dorthin verbrachten leeren Lagerungseinheit mit einem RFID-Transponder. Weiterhin gehören zum System einsprechend dieser Erfindung Informationsmittel zur Übermittlung der registrierten Information an den für die Kleingüterzugabe Verantwortlichen.

Die in einem solchen System eingesetzten Lagerplätze können, abhängig von Art und Größe der zu behandelnden Kleingüter sowie der erforderlichen Lagerungsmenge, in Form, Größe und Aufbau erheblich variieren. Ebenso sind Form, Aufbau und Größe der Lagerungseinheiten keine für die Erfindung wesentlichen Eigenschaften, vielmehr werden die allgemein eingesetzten Kästen oder Paletten nach Bedarf, d. h. nach Form, Menge und Gewicht der darin unterzubringenden Kleingüter, bemessen und gestaltet.

Mit dem für die Kleingüterzugabe Verantwortlichen wird in dieser Anmeldung eine beliebige Organisation, ein beliebiges System, ein beliebiges Unternehmen, eine beliebige Person oder eine beliebige sonstige Einheit bezeichnet, die oder das die erforderlichen Ergänzungen ausführen oder mit deren Hilfe oder Vermittlung dies geschieht.

Da das Lesegerät eine in die Rückführungsstation eingebrachte Lagerungseinheit automatisch registriert, ist an der Rückführungsstation oder in deren Nähe vorteilhafterweise ein Indikator angebracht, der eine erfolgte Registrierung eindeutig anzeigt. Ein solcher Indikator ist geeigneterweise entweder ein Lichtsignal oder ein akustisches Signal oder auch eine Kombination von beiden.

Normalerweise sind die einzusetzenden Lagerungseinheiten recycelbar, wie beispielsweise Kunststoffkästen und Holzpaletten. Somit stellt die Rückführungsstation einen Sammelraum dar, dessen Größe und Form von den dorthin zu verbringenden Lagerungseinheiten abhängen sowie vom Entleerungszeitplan der einzusetzenden Rückführungsstation.

Natürlich ist es auch möglich, dass die Lagerungseinheiten nur einmal verwendbar sind, beispielsweise Pappkartons. Hierbei kann als Rückführungsstation ein beliebiger Raum oder eine beliebige Fläche genutzt werden, zum Beispiel ein Abfallcontainer, wobei am oberen Rand des offenen Containers oder an den Deckelrändern einer mit einem Deckel versehenen Palette ein abnehmbares Lesegerät befestigt ist, zwecks Einlesen der an diesem vorbei ausgeworfenen und auszusondernden Lagerungseinheiten.

Eine in einem solchen System eingesetzte Rückführungsstation kann lagerplatzspezifisch sein. Anders gesagt, kann sich auf jedem Regal, beispielsweise auf der obersten Ebene, der untersten Ebene oder auf dem Boden, eine eigene Rückführungsstation befinden. Somit kann die Person, die den letzten Artikel aus einer Lagerungseinheit entnimmt, gleichzeitig und ohne sich einen Schritt zu bewegen, die leere Lagerungseinheit in die Rückführungsstation bringen.

Eine andere Möglichkeit ist, dass die Rückführungsstation vom Lagerplatz getrennt ist und für mehrere Lagerplätze gemeinsam genutzt wird. Hierbei kann sich die Rückführungsstation beispielsweise auf einem Regal befinden, zwischen Regalen, am Ende von Regalreihen oder auch in der Nähe eines Raums mit Lagerplätzen, eines Lagerraums oder der Ausgangstür eines Lagerhauses. Somit kann eine Person, die Artikel aus dem Lager holt, wenn sie den letzten Artikel aus einer Lagerungseinheit entnimmt, gleichzeitig die Lagerungseinheit mitnehmen und diese beim Verlassen des Lagers in die Rückführungsstation neben der Tür fallen lassen.

Da die Rückführungsstation und das hieran angebrachte Lesegerät mit Fernidentifizierung arbeiten, d. h., das Lesegerät führt die Registrierung mit einem bestimmten Abstand aus, ist es vorteilhaft, im Zusammenhang mit dem Lesegerät der Rückführungsstation eine Sicherung zu verwenden, z. B. eine geeignete Metallblech-Ummantelung. Damit wird die Registrierung von Lagerungseinheiten verhindert, die sich an Lagerplätzen befinden und in deren Nähe verarbeitet werden. Anders gesagt wird mit der Sicherung verhindert, dass beispielsweise ein auf dem gleichen Regal befindliches Lesegerät Lagerungseinheiten einliest und registriert, die im Regal verarbeitet werden oder im vollen Zustand zur Auffüllung ins Regal verbracht werden.

RFID-Transponder sind meist dünne Aufkleber, die an der Vorderseite von Kästen oder dergleichen befestigt werden. Auf der Oberseite eines solchen Aufklebers kann auch ein traditioneller Strichcode angebracht sein, wobei die Informationsinhalte von Strichcode und RFID-Transponder sich entsprechen; Lagerbestände können auch mit einem Strichcodeleser überwacht werden.

Gegenstand der Erfindung ist ein Verfahren zur Ergänzung eines Kleingüterlagers gemäß Anspruch 1. Zu diesem Kleingüterlager gehört eine große Anzahl Lagerungseinheiten, wie Kästen, Paletten oder dergleichen, die zwecks Fernidentifizierung der in ihnen zu lagernden Kleingüter, d. h. ohne Berührung mit einem Identifizierungsmittel, alle mit Identifizierungstranspondern ausgerüstet werden. Entsprechend dieser Erfindung wird in der Lagerungseinheit als Identifizierungstransponder ein RFID-Transponder eingesetzt, wobei dieser bei der Entleerung der Lagerungseinheit von seinem Einsatzort entfernt wird. Hiernach wird die entnommene Lagerungseinheit zwecks Registrierung derselben in einen Lesbarkeitsabstand zum Lesegerät des RFID-Transponders gebracht, danach wird die registrierte Information an den für die Kleingüterzugabe Verantwortlichen übermittelt.

Die entnommene Lagerungseinheit wird vorteilhafterweise an eine mit einem Lesegerät für RFID-Transponder ausgerüstete Rückführungsstation verbracht, wobei die Registrierung der entnommenen Lagerungseinheit automatisch und gleichzeitig mit der Entnahmeverarbeitung der leeren Lagerungseinheit ohne eigentlichen Registrierungsvorgang erfolgt.

Das Lesegerät des RFID-Transponders wird vorteilhafterweise vor unbeabsichtigten Lesevorgängen geschützt. Somit werden im Kleingüterlager und in dessen naher Umgebung zu bearbeitende sonstige Lagerungseinheiten, wie neue ergänzungsweise eingebrachte Lagerungseinheiten oder Bewegungen von bereits vorhandenen Lagerungseinheiten z. B. von einem Regal auf ein anderes, nicht unnötigerweise und fehlerhaft im System registriert.

In einem erfindungsgemäßen Verfahren können an sich beliebige bekannte und für das System geeignete Datenerfassungsmittel und Datenübertragungsmittel eingesetzt werden. Somit kann die registrierte Information über eine leere und entnommene Lagerungseinheit unmittelbar an den Empfänger der Information übermittelt werden, oder die Information kann gesammelt und in geeigneten definierten Abständen weiter vermittelt werden. Es ist auch möglich, dass Informationen nicht automatisch versandt werden, sondern dass ein Lieferant, der die Information braucht, diese in vorher festgelegten oder für ihn passenden Zeitintervallen aus Dateien abruft.

In einem erfindungsgemäßen System und Verfahren wird jede Lagerungseinheit vorteilhafterweise individuell registriert und verarbeitet. Somit kann der gleiche Kasten oder eine sonstige Lagerungseinheit nur einmal aus dem System entfernt werden, und entsprechend können auch mehrere gleichartige Lagerungseinheiten mit dem gleichen Wareninhalt nicht miteinander verwechselt werden.

In einer Anwendung der Erfindung ist eine Überwachung oder Kontrolle der Aktivität der Lagerplätze im System implementiert, die auf Betreiben des für die Kleingüterzugabe Verantwortlichen oder des Systems aktiviert werden kann, beispielsweise in geeigneten definierten Abständen. Die Kontrolle erfolgt als Fernüberprüfung, d. h., über eine geeignete Telekommunikationsverbindung wird überprüft, ob die Lesegeräte der Rückführungsstationen und die weiter hinten liegenden Verbindungen funktionieren. Damit wird sichergestellt, dass die meist sporadisch und unvorhersehbar eingehenden Ergänzungsdaten immer ankommen.

Im Vergleich zur bekannten Technik werden mit dem erfindungsgemäßen Verfahren bedeutende Vorteile erreicht. Die Erfindung beseitigt unnötige Arbeitsabschnitte. Eine in die Rückführungsstation verbrachte leere Lagerungseinheit ist das Signal für einen Ergänzungsbedarf. Außer dem Sammeln leerer Lagerungseinheiten sind keine weiteren Aktivitäten erforderlich. In einem erfindungsgemäßen Verfahren braucht niemand die Entleerung der Lagerungseinheiten oder den Bestellungsbedarf zu überwachen. Ebenso können nicht die bei der Strichcodetechnik möglichen Lesefehler entstehen, d. h., es werden nicht versehentlich Strichcodes eines benachbarten Kastens eingelesen.

Das Verfahren ermöglicht eine präzise Vorausplanung zwecks Optimierung der Güterzugaben, Liefermengen und Lieferfristen. Informationen über einen Ergänzungsbedarf können bei Bedarf in Echtzeit übermittelt werden, somit erfolgt die Reaktion auf mögliche Änderungen des Kundenverbrauchs ohne Verzögerung.

Das erfindungsgemäße Verfahren ist vollständig unabhängig vom Umfang des Systems oder von der Menge, Art und Größe einzelner Kleingüter. Das System kann laufend und frei geändert, erweitert und reduziert werden, Menge und Sortiment der zu lagernden Güter können vergrößert oder verkleinert werden, ohne dass diese Änderungen die Funktionalität des Verfahrens in irgendeiner Weise beeinflussen.

Ein System, das das Verfahren ausführt, arbeitet selbstständig und ohne Wartung, auch enthält die erforderliche Hardware keine Verschleißteile oder gegen Verschmutzung empfindliche Teile. Zusätzliche Ergänzungen erfolgen erfindungsgemäß nur dem tatsächlichen Verbrauch entsprechend, sodass keine Überfüllung auftreten kann.

Weiterhin ist das erfindungsgemäße Verfahren nicht auf nur einen Lieferanten ausgerichtet, sondern hieran kann zwecks Lagerung des gewünschten und jeweils benötigten Warensortiments die erforderliche Anzahl Lieferanten angeschlossen werden.

Im Vergleich mit Regalsystemen, die auf der Wiegetechnik basieren, ermöglicht die Erfindung weiterhin die Entnahme eines Kastens aus einem Regal und den Transport an einen beliebigen Einbauort oder dergleichen, ohne dass ein Lesevorgang stattfindet. Bei der Wiegetechnik würde eine Nachbestellung ausgelöst, weil das Gewicht des Lagerplatzes unter die Bestellgrenze absinken würde. Gemäß der Erfindung können Kästen frei verschoben werden und zum Schluss an das richtige Regal zurückgeben werden, oder ein leerer Kasten kann sogar an eine andere zum gleichen System gehörende Rückführungsstation zurückgeben werden. Somit ist das System sehr flexibel und leicht zu bedienen.

### ABBILDUNGSVERZEICHNIS

Im Folgenden wird die Erfindung detailliert beschrieben, hierbei wird auf beiliegende Zeichnungen Bezug genommen:

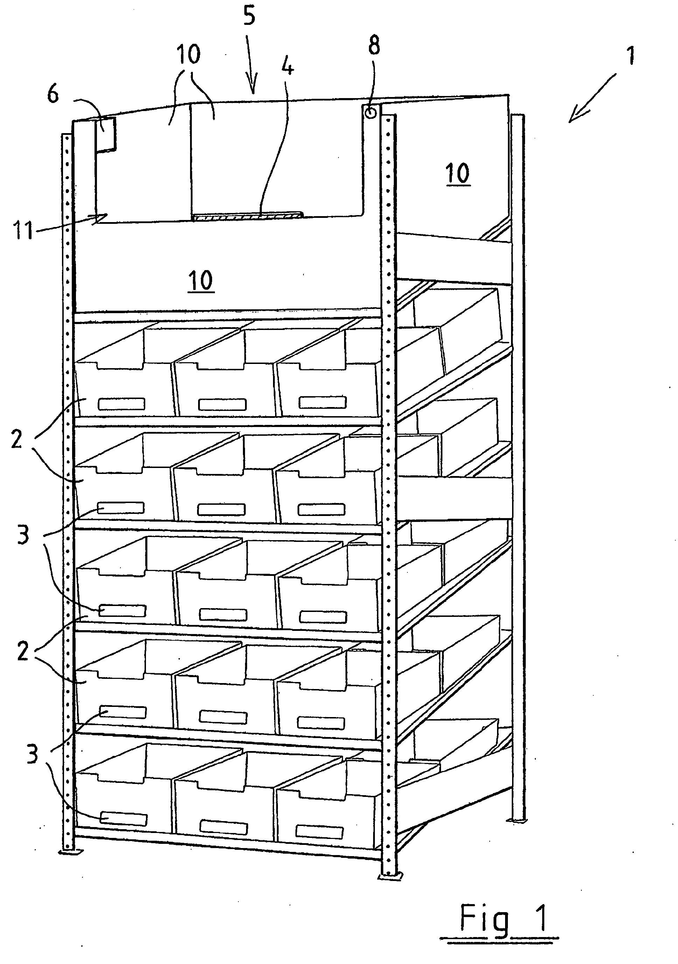

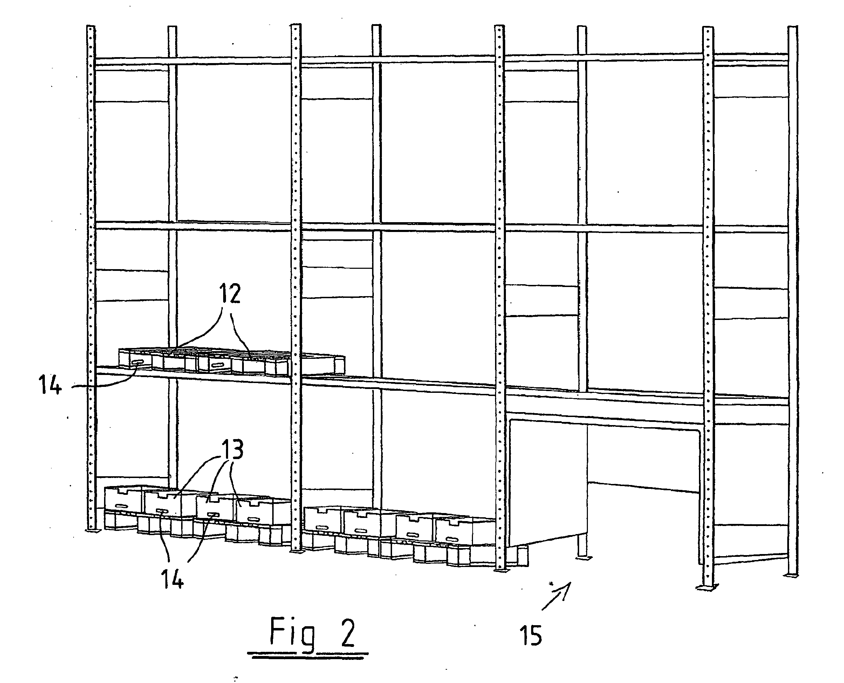

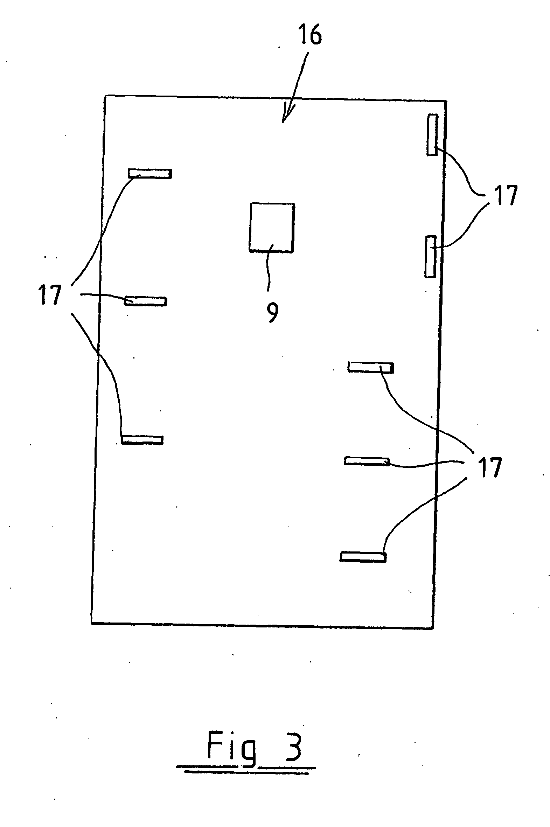

Abbildung 1: ein einzelnes Regal, das zum Durchführen des erfindungsgemäßen Verfahren benutzt werden kann Abbildung 2: ein anderes Regal, das zum Durchführen des erfindungsgemäßen Verfahren benutzt werden kann Abbildung 3: schematische Darstellung eines größeren Systems, das zum Durchführen des erfindungsgemäßen Verfahren benutzt werden kann

### AUSFÜHRLICHE BESCHREIBUNG DER ERFINDUNG

Zum System wie in Abbildung 1 gehört ein Regal, das den Lagerplatz 1 darstellt, mit einer großen Anzahl Lagerungseinheiten 2 (Kästen) auf verschiedenen Regalebenen. An der Vorderkante jedes Kastens ist ein RFID-Transponder 3 befestigt, ein RFID-Etikett. Bei dieser Anwendung besteht das Regal aus fünf Regalebenen, auf diesen befindet sich eine Rückführungsstation 5, die einen nach oben offenen Raum bildet, der größer als eine Regalebene ist. Dieser Raum ist nach unten und seitlich mit einem Metallblech abgegrenzt, das die elektromagnetische Absicherung 10 darstellt. An der Vorderkante ist jedoch eine Öffnung 11, durch die der Transport der leeren Lagerungseinheiten 2 in die Rückführungsstation 5 ermöglicht wird. An den Rändern dieser Öffnung, um sie herum oder in ihrer Nähe ist ein Lesegerät 4 für RFID-Transponder angebracht, sodass ein durch die Öffnung in die Rückführungsstation eingeführter RFID-Transponder und mit diesem ein Kasten registriert wird. Weil der Raum mit der Sicherung 10 begrenzt ist, liest das Lesegerät keine außerhalb des Raums befindlichen Kästen, sondern nur durch die Öffnung in den Raum verbrachte Kästen. Weiterhin gehört zur Rückführungsstation 5 ein Indikator 8, z. B. ein Lichtsignal, das eine erfolgte Registrierung anzeigt.

Außerdem gehören zum Regal die Informationsmittel 6 zur Übermittlung der registrierten Information über den Ergänzungsbedarf des Regals an den für die Kleingüterzugabe Verantwortlichen. Als Informationsmittel kann jede beliebige an sich bekannte drahtlose oder drahtgebundene Technik eingesetzt werden, mit der die benötigte Information in erforderlicher Weise gesammelt, bearbeitet und übermittelt werden kann.

Die Funktion des Systems ist einfach ausgedrückt folgende. Die Anwender entnehmen aus den Kästen 2 die benötigten Waren, und wenn der Kasten leer wird, d. h. beim Entnehmen des letzten Artikels, bringt der Anwender den leeren Kasten in die Rückführungsstation 5. Mehr braucht der Anwender des Systems nicht zu tun. Hiernach wird die Information über den entleerten Kasten entweder sofort oder zu festgelegten Zeiten weiter übermittelt, und die Ergänzungen treffen rechtzeitig im Regal ein. Beispielsweise können sich, wie in der Abbildung, auf einem Regal zwei Kästen mit dem gleichen Artikel befinden, sodass bei Entleerung des ersten und verbringung zur Rückführungsstation der zweite dahinter befindliche nach vorne kommt. Somit kann ein neuer voller Kasten geliefert werden, während der zweite Kasten noch genutzt wird.

In Abbildung 2 wird eine zweite Möglichkeit dargestellt, bei der der Lagerplatz ein Palettenregal ist. Hier können einzelne Paletten 12 oder auf diesen gelagerte Kästen 13 als Lagerungseinheiten eingesetzt werden. Sowohl Paletten als auch Kästen sind mit den eindeutig gekennzeichneten RFID-Transpondern 14 ausgestattet. Da die Kästen und vor allem die Paletten groß und schwer sind, ist die Rückführungsstation 15 in dieser Anwendung auf der Flurebene angeordnet. Ansonsten ist ihre Struktur und Funktion ähnlich wie in der Anwendung nach Abbildung 1.

In Abbildung 3 wird ein System vorgestellt, zu dem beispielsweise in einer großen Montagehalle 16 mehrere Einbauorte gehören, und zu jedem ein Kleingüterregal 17. Hierbei braucht nicht unbedingt jedes Regal eine eigene Rückführungsstation, sondern man kann eine gemeinsame Rückführungsstation 9 verwenden, zu der jeder Monteur die eigenen leeren Kästen zurückbringt. Da die Kästen über ihren RFID-Transponder individuell identifizierbar sind, werden Ergänzungen unabhängig von der gemeinsamen Rückführungsstation separat und individuell an jedes Regal geliefert.

Die Erfindung wird nicht nur auf die obengenannten Beispiele eingegrenzt, vielmehr sind im Rahmen der in den Patentansprüchen definierten erfinderischen Idee viele Varianten möglich.

## Patentansprüche

1. Verfahren zur Ergänzung eines Kleingüterlagers, wobei zum Kleingüterlager eine große Anzahl Lagerungseinheiten (2), wie Kästen, Paletten oder dergleichen gehören, die zwecks Erkennung der in ihnen zu lagernden Kleingüter alle mit Identifizierungstranspondern (3) ausgerüstet werden,
- wobei in der Lagerungseinheit (2) ein RFID-Transponder (3) als Identifizierungstransponder verwendet wird,
- wobei eine entleerte Lagerungseinheit (2) von ihrem Einsatzort entfernt wird,
- wobei die entnommene Lagerungseinheit (2) zwecks Registrierung der entnommenen Lagerungseinheit (2) in einen Lesbarkeitsabstand zum Lesegerät (4) des RFID-Transponders (3) gebracht wird und
- wobei die registrierte Information an den für die Kleingüterzugabe Verantwortlichen übermittelt wird, und
- wobei die Übermittlung der registrierten Information die Ergänzung des Kleingüterlagers mit denselben Kleingütern wie denen, die in der entleerten Lagerungseinheit (2) waren, auslöst bzw. triggert.

2. Verfahren in Übereinstimmung mit Patentanspruch Nr. 1, **dadurch gekennzeichnet, dass** die entnommene Lagerungseinheit (2) zwecks Registrierung der entnommenen Lagerungseinheit (2) an eine mit einem Lesegerät (4) für RFID-Transponder (3) ausgerüstete Rückführungsstation (5) angebracht wird.

3. Verfahren in Übereinstimmung mit Patentanspruch Nr. 1 oder 2, **dadurch gekennzeichnet , dass** das Lesegerät (4) geschützt wird, um eine Registrierung der im Kleingüterlager und in dessen naher Umgebung zu verarbeitenden Lagerungseinheiten (2) zu verhindern.

4. Verfahren in Übereinstimmung mit einem der Patentansprüche 1 - 3, **dadurch gekennzeichnet, dass** die registrierte Information unmittelbar oder periodisch an den für die Kleingüterzugabe Verantwortlichen übermittelt wird.

5. Verfahren in Übereinstimmung mit einem der Patentansprüche 1 - 4, **dadurch gekennzeichnet, dass** die entnommene Lagerungseinheit (2) individuell so registriert wird, dass eine nochmalige Registrierung der gleichen Lagerungseinheit (2) verhindert wird.

6. Verfahren in Übereinstimmung mit einem der Patentansprüche 1 - 5, **dadurch gekennzeichnet, dass** der für die Kleingüterzugabe Verantwortliche die Funktion des Kleingüterlagers zu festgelegten Zeiten überprüft.

## Claims

1. A method of adding to a small item store, wherein forming part of the small item store are a number of storage units (2), such as crates, pallets or suchlike, which for the purpose of recognising the small items that are to be stored in them are all equipped with identification transponders (3),
- wherein in the storage unit (2) an RFID transponder (3) is used as the identification transponder,
- wherein an emptied storage unit (2) is removed from its place of deployment,
- wherein for the purpose of recording the removed storage unit (2), the removed storage unit (2) is moved to a reading distance in relation to the reading device (4) of the RFID transponder (3) and
- wherein the recorded information is forwarded to the person responsible for adding small items
and
- wherein the forwarding of the recorded information initiates/triggers the replenishment of the small items store with the same type of small items as those that were in the emptied storage unit (2).

2. The method according to claim 1, **characterised in that** for the purpose of recording the removed storage unit (2), the removed storage unit (2) is moved to a return station (5) equipped with a reading device (4) for RFID transponder (3).

3. The method according to claim 1 or 2, **characterised in that** the reading device (4) is protected in order to prevent recording of the storage units (2) to be processed in the small item store and its immediate vicinity.

4. The method according to any one of claims 1 - 3, **characterised in that** the recorded information is immediately or periodically forwarded to the person responsible for adding to the small item store.

5. The method according to any one of claims 1 - 4, **characterised in that** the removed storage unit (2) is individually recorded in such a way that repeated recording of the same storage unit (2) is prevented.

6. The method according to any one of claims 1 - 5, characterised that the person responsible for adding to the small item store checks the functioning of the small item store at predetermined times.

## Revendications

1. Procédé de mise à jour d'un entrepôt de petites marchandises, sachant qu'un grand nombre d'unités de stockage (2) comme des caisses, des palettes ou similaire font partie de l'entrepôt de petites marchandises, qui sont toutes équipées de transpondeurs d'identification (3) pour identifier les petites marchandises à stocker dedans,
- sachant qu'un transpondeur RFID (3) est employé en tant que transpondeur d'identification dans l'unité de stockage (2),
- sachant qu'une unité de stockage (2) vidée est enlevée de son lieu d'utilisation,
- sachant que l'unité de stockage (2) prélevée est placée à une distance de lecture du lecteur (4) du transpondeur RFID (3) à des fins d'enregistrement de l'unité de stockage (2) prélevée et
- sachant que l'information enregistrée est transmise à la personne responsable du réapprovisionnement en petites marchandises
et
- sachant que le transfert de l'information enregistrée déclenche la mise à jour de l'entrepôt de petites marchandises avec les mêmes petites marchandises qui étaient dans l'unité de stockage (2) vidée.

2. Procédé selon la revendication 1, **caractérisé en ce que** l'unité de stockage (2) prélevée est placée dans un poste de retour (5) équipé d'un lecteur (4) de transpondeur RFID (3) à des fins d'enregistrement de l'unité de stockage (2) prélevée.

3. Procédé selon la revendication 1 ou 2, **caractérisé en ce que** le lecteur (4) est protégé afin d'empêcher un enregistrement des unités de stockage (2) à traiter dans l'entrepôt de petites marchandises et dans son environnement proche.

4. Procédé selon l'une des revendications 1 à 3, **caractérisé en ce que** l'information enregistrée est transmise directement ou périodiquement à la personne responsable du réapprovisionnement en petites marchandises.

5. Procédé selon l'une des revendications 1 à 4, **caractérisé en ce que** l'unité de stockage (2) prélevée est enregistrée individuellement, d'une façon à éviter que cette même unité de stockage (2) ne soit enregistrée une nouvelle fois.

6. Procédé selon l'une des revendications 1 à 5, **caractérisé en ce que** la personne responsable du réapprovisionnement en petites marchandises vérifie le fonctionnement de l'entrepôt de petites marchandises à intervalles définis.
